# EUROPEAN PATENT APPLICATION

(11) **EP 4 703 115 A1**
(43) Date of publication of application: **04.03.2026**
(21) Application number: 24201089.0
(22) Date of filing: 18.09.2024
(51) Int. Cl.: B29C 37/00, B29C 44/12, B60R 13/08, G10K 11/162, B29C 44/42

(54) **VEHICLE SOUND INSULATION COMPONENT AND METHOD FOR ITS MANUFACTURE**

(30) Priority: 26.08.2024 US 202463686920 P
(71) Applicant: Auria Solutions UK I Ltd., EC4M 7WS London (GB)
(72) Inventor: Hilbert, Philipp Andreas, 30173 Hannover (DE); Weber, Karl-Heinz, 29227 Celle (DE)
(74) Representative: Liesegang, Eva

(57) **Abstract**

A method producing a vehicle sound insulator component (10) comprises: providing a first mold portion (80A) and second mold portion (80B); providing a sound barrier layer (11) having one or a plurality of openings (20) for passage of a foam precursor, said one or plurality of openings define an opening area in the range of 1.0 cm² to 10.0 cm²; placing the sound barrier layer between the first mold portion and second mold portion and closing the mold wherein the sound barrier layer is gripped between said first and second mold portions and defines a first lower cavity (81A) and second upper cavity (81B) each having a cavity thickness in the range of 0.1 mm to 50.0 mm; injecting a foam precursor into said first lower cavity and through said one or plurality of openings into said second upper cavity; and forming foam in said first lower cavity having a thickness in the range of 0.1 mm to 50.0 mm and forming foam in said second upper cavity having a thickness in the range of 0.1 mm to 50.0 mm, wherein said foam has a density in the range of 35 g/dm³ to 95 g/dm³.

## Description

### FIELD

The present disclosure relates to vehicle sound insulation component comprising a sound barrier layer where foam is introduced to both sides of a sound barrier layer and where the foam can be configured to follow and accommodate various three-dimensional contours within the sound barrier layer. The foam can therefore replace the need to utilize sound absorbing fleece material.

### BACKGROUND

Most vehicles have sound insulators designed to reduce noise emissions in the external environment as well as within the passenger compartment. These sound insulators are typically arranged in various locations on the motor vehicle's body-in-white. As used herein, "body-in-white" refers to any portion of the automobile's frame.

Such sound insulators are often located on a frame panel between the engine and the passenger compartment. Vehicle sound insulators often include a sound barrier layer and one or more sound absorbers applied to the sound barrier's surfaces. These sound absorbers further dampen noise and have historically been either fleece or foam. A sound barrier layer is therefore typically used for insulation and damping of metal sheets and metal parts in the vehicle.

There nevertheless exists an on-going need for improvements in the preparation of vehicle sound insulators that would include one or more foam absorbers where a precursor foam formulation is introduced through openings in the sound barrier layer where the foam absorbers as formed are positioned on both sides of the sound barrier layer in the same processing step and without having to simultaneously puncture the sound barrier layer. Such a process would then preferably remove the need to separately and manually position a two-dimensional fleece layer of uniform thickness.

### SUMMARY

A method producing a vehicle sound insulator component comprising:
a. providing a first mold portion and second mold portion;
b. providing a sound barrier layer having one or a plurality of openings for passage of a foam precursor, said one or plurality of openings define an opening area in the range of 1.0 cm² to 10.0 cm²;
c. placing the sound barrier layer between the fist mold portion and second mold portion and closing the mold wherein the sound barrier layer is gripped between said first and second mold portions and defines a first lower cavity and second upper cavity each having a cavity thickness in the range of 0.1 mm to 50.0 mm;
d. injecting a foam precursor into said first lower cavity and through said one or plurality of openings into said second upper cavity; and
e. forming foam in said first lower cavity having a thickness in the range of 0.1 mm to 50.0 mm and forming foam in said second upper cavity having a thickness in the range of 0.1 mm to 50.0 mm, wherein said foam has a density in the range of 35 g/dm³ to 95 g/dm³.

### BRIEF DESCRIPTION OF THE DRAWINGS

Features and advantages of this disclosure will become more apparent as the following detailed description proceeds, and upon reference to the drawings, wherein like numerals designated like parts, and in which:
**FIG. 1** illustrates in cross-section a preferred vehicle sound insulator component.
**FIG. 2** illustrates in perspective view a preferred vehicle sound insulator component.
**FIG. 3** illustrates in perspective view a preferred cross-sectional geometry for the one or plurality of openings **20.**
**FIG. 4** illustrates in perspective view a preferred cross-sectional geometry for the one or plurality of openings **20.**
**FIG. 5** illustrates in cross-section the preferred vehicle sound insulator component as applied to a vehicle's body-in-white (metallic) surface.
**FIG. 6A** illustrates in cross-section the sound barrier positioned between first and second mold portions.
**FIG. 6B** illustrates in cross-section the first and second mold portions in the closed position.
**FIG. 6C** illustrates in cross-section the first cavity and second cavity of the mold filled with foam absorber material.
**FIG. 6D** illustrates in cross-section the vehicle sound insulator produced from molding.
**FIG. 7** illustrates a sound absorber layer where at locations **"A"** and **"B"** there is placement of fleece material.
**FIG**. **8** illustrates a sound absorber layer where at locations "**C**", "**D**" and "**E**" the fleece has been replaced for the identified foam sections on top of the sound barrier layer **11.**
**FIG. 9** illustrates the comparative acoustic performance of a vehicle sound insulation component relying upon fleece versus the vehicle sound insulator component prepared herein providing foam on both sides of the sound barrier layer.

### DETAILED DESCRIPTION OF PREFERRED EMBODIMENTS

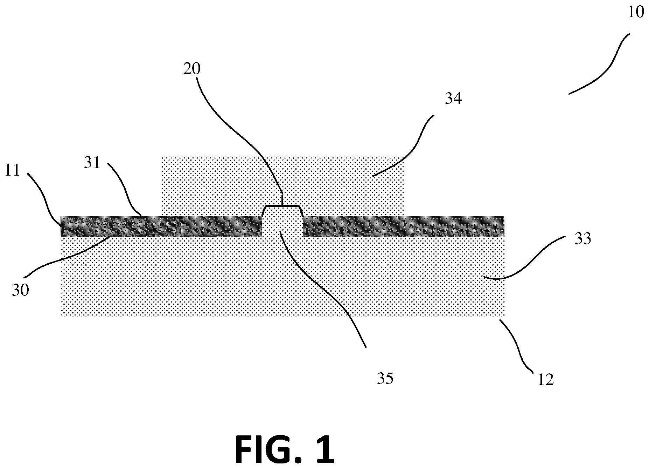

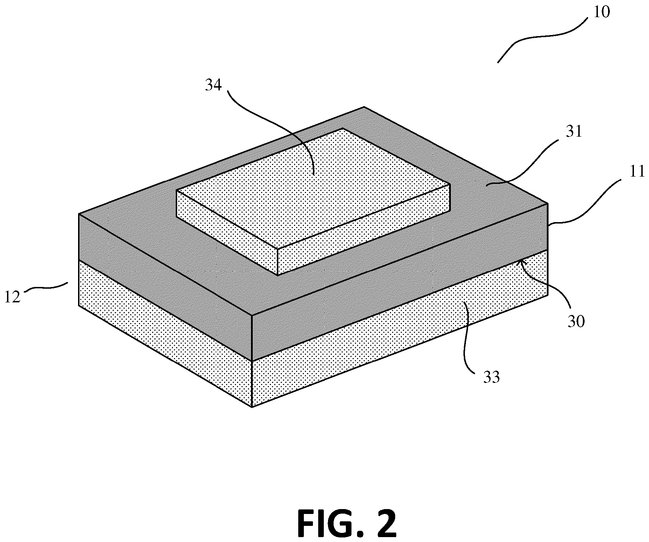

Preferred embodiments of the present invention will now be described. This will first include a description of the as-formed vehicle foam sound insulation component and then the corresponding preferred process for its formation. **FIGS. 1** **&** **2** therefore provide a preferred construction of the as-formed vehicle sound insulation component **10** herein. More specifically, **FIG. 1** depicts a cross-sectional view and **FIG. 2** depicts a perspective view of a sub-section of the preferred vehicle foam sound insulation component **10.**

As can be seen in **FIGS. 1** **&** **2****,** the preferred vehicle sound insulator component **10** herein includes a sound barrier layer **11** and one or a plurality of foam absorbers **12.** The sound barrier layer preferably comprises a polymeric resin, preferably PE-EVA (polyethylene ethylene vinyl acetate) or a thermoplastic elastomer (TPE). In particular, thermoplastic polyolefin elastomers TPO or TPV may preferably be used, which comprises polypropylenes having up to 65% ethylenepropylene [diene] rubber (EP[D]M) incorporated therein. The sound barrier layer may also comprise thermoplastic elastomers that rely upon a polystyrene component in combination with polyethylene and polybutadiene, the so-called SEBS resins. The sound barrier layer also preferably contains additives and fillers. The sound barrier layer herein preferably has a thickness in the range of 0.1 mm to 6.0 mm, including all individual values and increments therein, and a density of 0.6 kg/m² to 8.0 kg/m², including all individual values and increments therein.

The one or plurality of openings **20** are such that they are of variable geometry and the one or plurality of openings **20** preferably provide an opening area in the range of 1.0 cm² to 10.0 cm² including all values and increments therein. More preferably, the one or plurality of openings **20** in the sound barrier layer **11** define an area in the range of 0.5 cm² to 2.5 cm². The one or plurality of openings **20** may therefore be round, oval, rectangular, square, triangular, polygonal, or a mixture of such geometries.

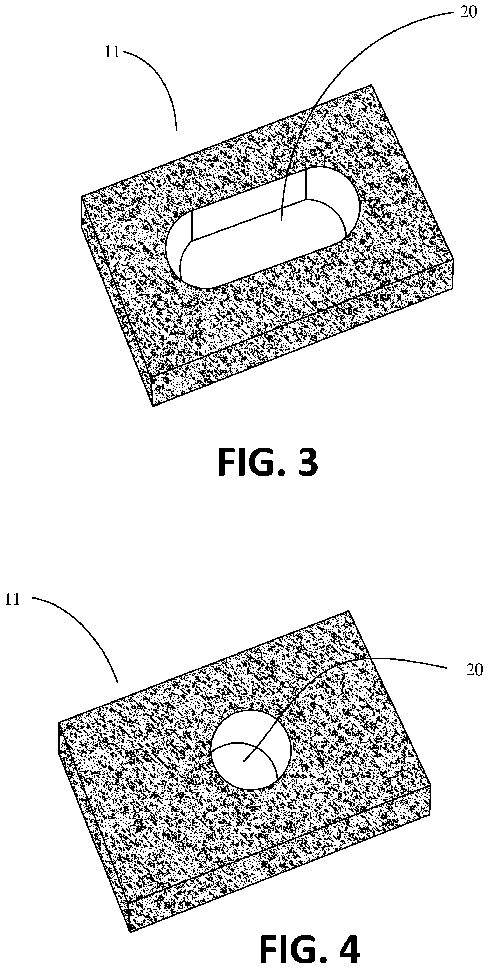

A preferred embodiment of the one or more openings **20** is shown in **FIG. 3****,** where the cross-sectional geometry may be described as slot shaped. Another embodiment of the one or more openings **20** is next shown in **FIG. 4****,** where the cross-sectional geometry is now round. The total number of openings **20** in the sound barrier layer, for the passage of foam precursor during production, may preferably fall in the range of 1-10 openings, including all values and increments therein. More preferably, there may be 1-5 openings present in the sound barrier layer **11.** In addition, reference to foam precursor herein is reference to the ingredients that one typically employs to produce a given foam formulation, which therefore includes reactants to form a selected polymeric resin and an appropriate foaming agent.

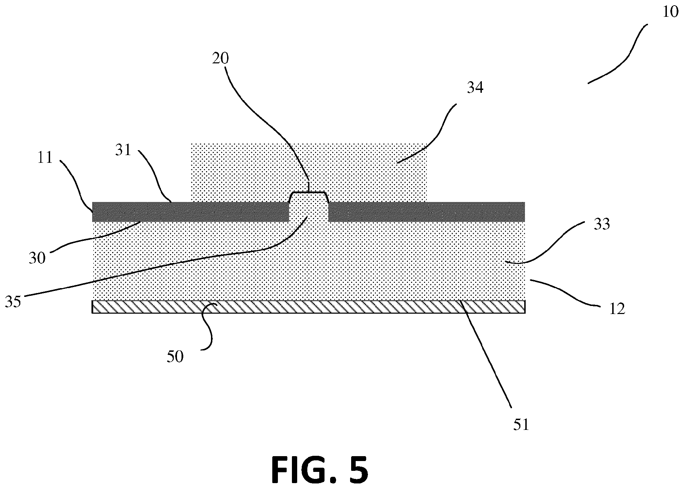

With attention now directed to **FIG. 5****,** the sound barrier layer **11** has a front surface **30,** a back surface **31,** and as noted, one or more openings **20** extending between the first surface **30** and the back surface **31.** The one or plurality of foam absorber(s) **12** have a front portion **33** molded onto the front surface **30** of the sound barrier layer **11,** a back portion **34** also molded onto the back surface **31** of the sound barrier layer **11,** and a middle portion **35** connecting the back portion **34** and the front portion **33** through the one or more openings **20.** As shown in **FIG. 5****,** the vehicle insulator component **10** may be installed on a vehicle's body-in-white **50.** Preferably, the vehicle insulator component **10** may be installed on a portion of an vehicle's body-in-white **50** such that the front surface **33** of the foam absorber(s) **12** contacts a surface of the vehicle's body-in-white **50.**

The one or plurality of foam absorber(s) **12** preferably comprises polyurethane foam. The density of the foam absorber(s) **12** is preferably in the range of 35 g/dm³ to 95 g/dm³, including all values and increments therein, where g/dm³ is reference to the units of grams per decimeter cubed. More preferably the density of the one or plurality of foam absorber(s) **12** may be in the range of 50 g/dm³ to 80 g/dm³. The front portion **33** of the foam absorber(s) **12** may have a thickness extending perpendicularly away from the area on the front surface **30** of the sound barrier layer **11** extending to the surface **51** of the body-in-white **50.** This thickness of the front portion **33** may preferably be in the range of 0.1 mm to 50 mm, including all values and increments therein, such as more preferably in the range of 5 mm to 25 mm. The back portion **34** of the foam absorber(s) **12** may have a thickness extending perpendicularly away from the area on the back surface **31** of the sound barrier layer **11** that is in contact with the back portion **34.** The thickness of the back portion **34** may preferably be in the range of 0.1 mm to 50 mm, more preferably in the range of 5 mm to 15 mm.

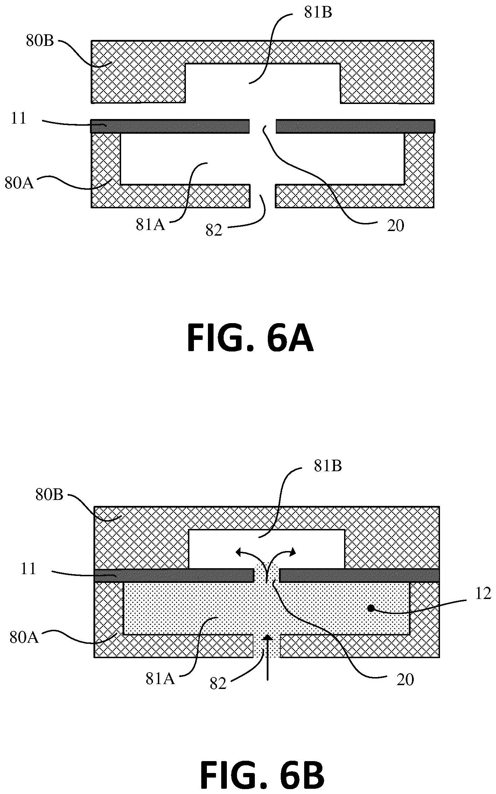

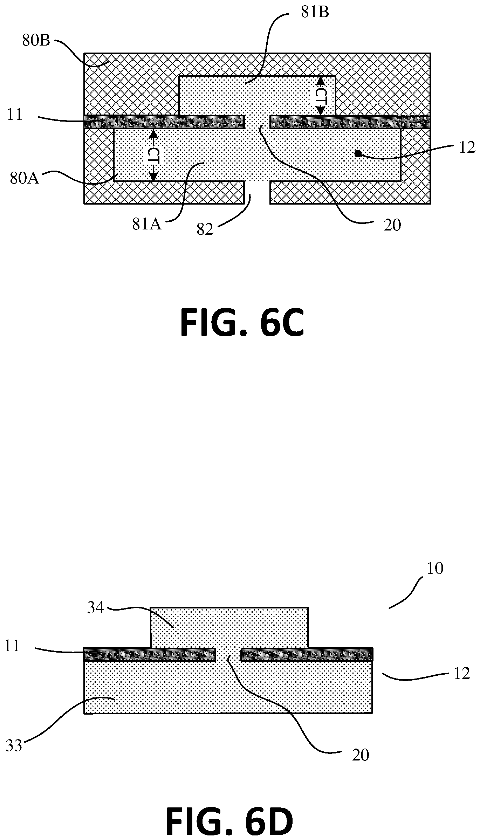

Additionally, the present disclosure relates to a method of producing an automotive insulator comprising a sound barrier layer and one or more foam absorbers as depicted in **FIGS. 6A**, **6B****,** **6C and 6D****.** As observed in **FIG. 6A** one provides a sound barrier layer **11** having one or a plurality of openings **20** and places the sound barrier **11** between a first **80A** and second **80B** mold portions of an injection molding tool. The first injection mold portion **80A** preferably has a first mold cavity **81A** and the second injection mold portion **80B** preferably has a second mold cavity **81B.** The sound barrier layer **11** is then placed between the two injection molding portions **80A, 80B** so that the one or plurality of openings **20** in the sound barrier layer **11** is/are positioned between the first mold cavity **81A** and the second mold cavity **81B.**

One of the first or second injection mold portions **80A** or **80B** preferably has an inlet **82** where precursor foam absorber material may be injected. **FIG. 6B** depicts the first and second mold portions in the closed position and the sound barrier layer **11** is now gripped between the first and second mold portions. The first injection molding portion **80A** has an inlet **82** where the foam absorber precursor material is injected into the first cavity **81A** and flows through the one or plurality of openings **20** in the sound barrier layer **11** and into the second cavity **81B.** As therefore may be appreciated, the sound barrier layer now gripped in the mold defines first lower cavity **81A** and second upper cavity **81B.** The first lower cavity and second upper cavity each preferably defines a cavity thickness **(CT)** in the range of 0.1 mm to 50 mm, including all values and increments therein. It should be noted that the cavity thickness of the upper portion is more preferably in the range of 5.0 mm to 15.0 mm.

**FIG. 6C** depicts the first cavity **80A,** the opening(s) **20** in the sound barrier layer **11,** and the second cavity **80B** after they have been filled and have formed foam absorber material **12.** **FIG. 6D** depicts a cross-section of the vehicle sound insulator **10** created in the preceding steps after the first and second injection mold portions **80A, 80B** have been removed. As can be seen, sound barrier layer **11** has one or a plurality of foam absorber(s) **12** molded onto both sides of and through the opening(s) **20** in the sound barrier layer **11.**

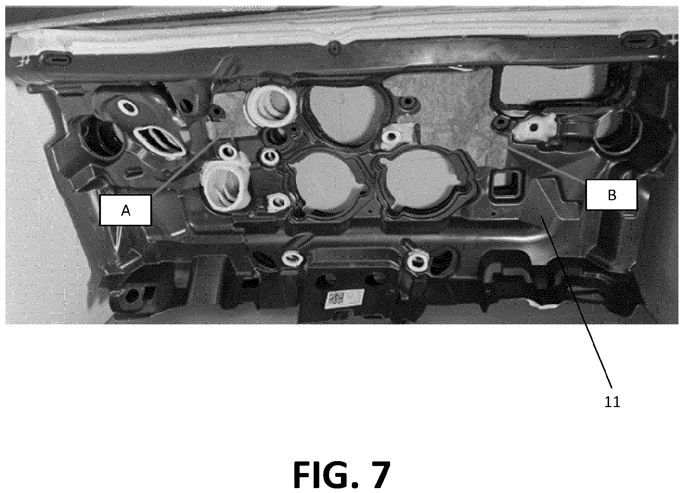

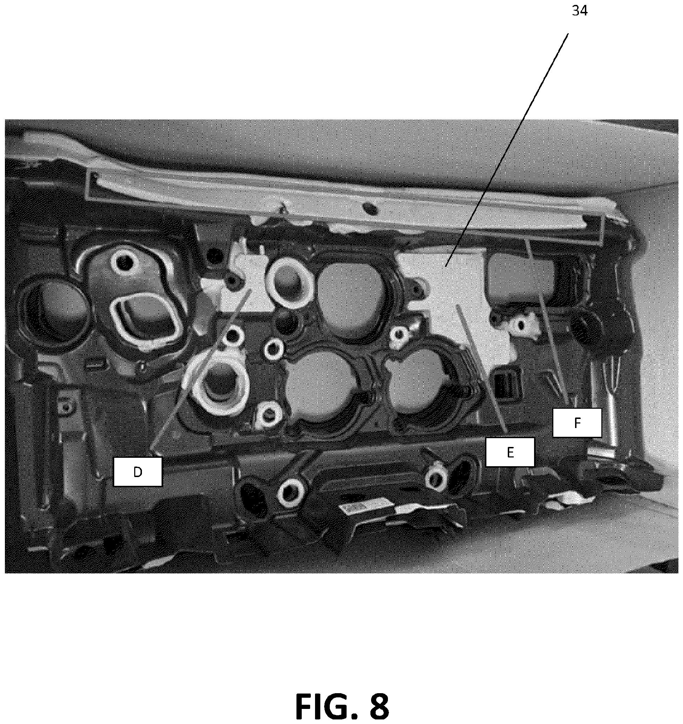

**FIG. 7** illustrates a sound barrier layer **11** where at locations **"A"** and **"B",** one previously relied upon the placement of fleece material on the sound barrier layer **11.** As next illustrated in **FIG. 8****,** by the placement of a plurality of openings **20** in the sound barrier layer **11,** and following the molding procedure discussed herein, one can introduce the foam precursor between the sound barrier layer and body in white, and at locations **"D", "E"** and **"F"** one can replace the fleece and selectively form foam sections **34** on the back surface **31** of the sound barrier layer.

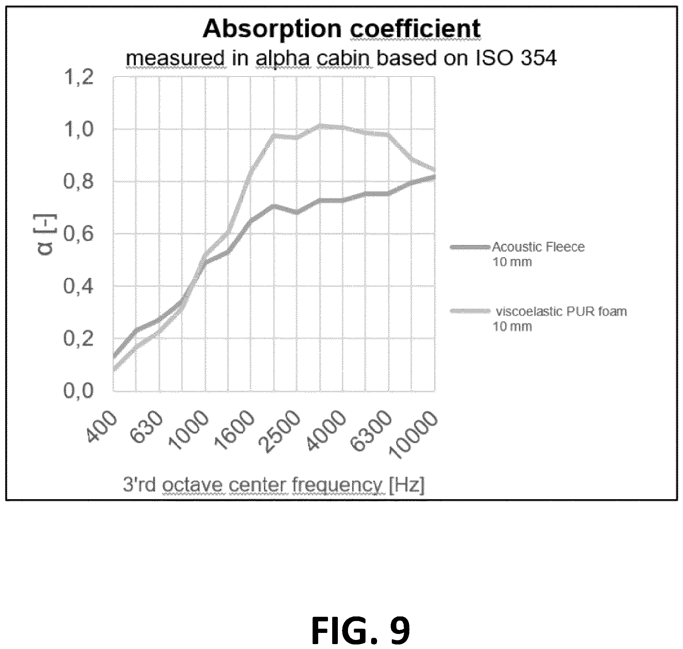

**FIG. 9** next illustrates by comparison the acoustic performance of a vehicle sound insulator component relying upon fleece versus the vehicle sound insulator component herein providing foam on both sides of the sound barrier layer. Testing was conducted according to current ISO354 protocols (Measurement of Sound Absorption In A Reverberation Room). A plot is provided showing the sound absorption coefficient (α) versus frequency. As can be observed, the use of the foam absorber herein selectively introduced through selected openings **20** in the sound barrier layer and positioned on both sides of the sound barrier layer **11** offers much improved performance.

## Claims

1. A method producing a vehicle sound insulator component comprising:
a. providing a first mold portion and second mold portion;
b. providing a sound barrier layer having one or a plurality of openings for passage of a foam precursor, said one or plurality of openings define an opening area in the range of 1.0 cm² to 10.0 cm²;
c. placing the sound barrier layer between the first mold portion and second mold portion and closing the mold wherein the sound barrier layer is gripped between said first and second mold portions and defines a first lower cavity and second upper cavity each having a cavity thickness in the range of 0.1 mm to 50.0 mm;
d. injecting a foam precursor into said first lower cavity and through said one or plurality of openings into said second upper cavity; and
e. forming foam in said first lower cavity having a thickness in the range of 0.1 mm to 50.0 mm and forming foam in said second upper cavity having a thickness in the range of 0.1 mm to 50.0 mm, wherein said foam has a density in the range of 35 g/dm³ to 95 g/dm³.

2. The method of claim 1 wherein said one or plurality of openings in said sound barrier comprises 1-10 openings.

3. The method of claim 1 or 2 wherein said one or plurality of openings in said sound barrier comprises 1-5 openings.

4. The method of one of the preceding claims wherein said sound barrier has a thickness in the range of 0.1 mm to 6.0 mm and a density in the range of 0.6 kg/m² to 8.0 kg/m².

5. The method of one of the preceding claims wherein said sound barrier comprises a polymeric resin.

6. The method of one of the preceding claims wherein said foam comprises polyurethane foam.

7. The method of one of the preceding claims wherein said upper second cavity has a thickness of 5.0 mm to 15.0 mm.

8. A method producing a vehicle sound insulator component comprising:
a. providing a first mold portion and second mold portion;
b. providing a sound barrier layer having one or a plurality of openings for passage of a foam precursor, said one or plurality of openings define an opening area in the range of 1.0 cm² to 10.0 cm²;
c. placing the sound barrier layer between the fist mold portion and second mold portion and closing the mold wherein the sound barrier layer is gripped between said first and second mold portions and defines a first lower cavity having a thickness in the range of 0.1 mm to 50.0 mm and second upper cavity each having a cavity thickness in the range of 5.0 mm to 15.0 mm;
d. injecting a foam precursor into said first lower cavity and through said one or plurality of openings into said second upper cavity; and
e. forming polyurethane foam in said first lower cavity having a thickness in the range of 0.1 mm to 50.0 mm and forming foam in said second upper cavity having a thickness in the range of 0.1 mm to 15.0 mm, wherein said foam has a density in the range of 35 g/dm³ to 95 g/dm³.

9. A vehicle sound insulator component produced according to the method of one of the preceding claims.
